# EUROPEAN PATENT SPECIFICATION

(11) **EP 3 821 746 B1**
(45) Date of publication and mention of the grant of the patent: **25.06.2025**
(21) Application number: 19930190.4
(22) Date of filing: 30.09.2019
(51) Int. Cl.: A43B 23/02, A43B 1/14, A43D 11/03, B33Y 10/00, B33Y 80/00

(54) **SHOE AND PRODUCTION METHOD FOR UPPER OF SHOE**
SCHUH UND VERFAHREN ZUR HERSTELLUNG DES OBERSCHUHS
CHAUSSURE ET PROCÉDÉ DE PRODUCTION DE LA TIGE DE CHAUSSURE

(43) Date of publication of application: 19.05.2021
(73) Proprietor: ASICS Corporation, Kobe-shi, Hyogo 650-8555 (JP)
(72) Inventor: TANABE, Tatsuro, Kobe-shi, Hyogo 650-8555 (JP); OOSAKI, Takashi, Kobe-shi, Hyogo 650-8555 (JP)
(74) Representative: Marks & Clerk LLP
(86) International application number: PCT/JP2019/038621
(87) International publication number: WO 2021/064821

(56) References cited:
- EP-A1- 2 855 752
- WO-A1-2016/145002
- JP-A- 2012 075 910
- JP-A- 2012 512 698
- JP-A- 2015 039 637
- JP-A- H05 228 002
- JP-U- H0 242 508
- JP-U- S5 310 635
- US-A1- 2013 260 629
- US-A1- 2017 265 596
- US-A1- 2018 104 922

## Description

### TECHNICAL FIELD

### BACKGROUND ART

A structure of a shoe includes roughly a sole that touches the ground and an upper that covers an instep part and a heel part of a foot.

The sole is usually made of a relatively thick rubber, a foamed synthetic resin, or the like. The upper is made of leather, artificial leather, fabric, or the like depending on an intended use of the shoe.

For example, Patent Document 1 discloses a shoe in which an upper includes fabric formed at least partially from a plurality of first strands and a plurality of second strands. The first strand is made of a thermoplastic polymer material, the fabric has a fusion region in which the first strand is fused to the second region and a non-fusion region in which the first strand is not fused to the second strand. The fusion region and the non-fusion region are arranged on an outer surface of the upper such that the fusion region is adjacent to the non-fusion region and both the fusion region and the non-fusion region are exposed.

Such a shoe has air permeability in the non-fusion region. Moreover, the shoe does not need to use a plurality of materials in order to give different characteristics in manufacturing the shoe. WO 2016/145002 describes products are at least partially formed from textiles. US 2017/265596 describes a last system for making articles of footwear.

### PATENT DOCUMENTS

Patent Document 1: JP 4376792 B2

### SUMMARY OF THE INVENTION

Incidentally, the upper of the shoe also has a role of protecting the instep part of the foot and the like, but the upper of the shoe of Patent Document 1 cannot have sufficient cushioning properties for absorbing an external impact. Moreover, the shoe of Patent Document 1 does not consider the ease of drying when the shoe is wet with water.

### PROBLEMS TO BE SOLVED BY THE INVENTION

An object of the present invention is to provide a shoe including an upper according to claim 1, which is excellent in air permeability and quick-drying properties and has good cushioning properties, and a method of manufacturing the upper according to claim 13.

### SOLUTIONS TO THE PROBLEMS

The shoe of the present invention includes an upper and a sole, wherein the upper is formed from a web including one or a plurality of randomly layered thermoplastic fine strands, the web includes a first region in which the thermoplastic fine strand is point-bonded to each other at contact portions and a second region in which the thermoplastic fine strand is fused, the second region having an apparent density higher than an apparent density of the first region, and a diameter of the thermoplastic fine strand in the first region ranges from 0.2 mm to 2 mm, and the apparent density of the first region ranges from 0.005 g/cm³ to 0.2 g/cm³.

According to another aspect of the present invention, there is provided a method of manufacturing an upper of a shoe.

The first method of manufacturing the upper includes a step of preparing a raw fabric web having an apparent density ranging from 0.005 g/cm³ to 0.2 g/cm³ by discharging one or a plurality of molten fine strands having a diameter of 0.2 mm to 2 mm from a nozzle, randomly layering the fine strand, and point-bonding the fine strand to each other at contact portions, a step of forming a region having an apparent density higher than 0.2 g/cm³ by heating any location of the raw fabric web and fusing the fine strand, and a step of forming the raw fabric web in a shape of the upper.

The second method of manufacturing the upper is a method of manufacturing an upper of a shoe formed from a web having one or a plurality of randomly layered thermoplastic fine strands by using a nozzle for discharging a molten fine strand and a shoe-last. The method includes a setting data input step of inputting setting data of a thickness and an apparent density of the web according to a portion of the upper, a shoe-last data generation step of generating shoe-last data by measuring a shape of the shoe-last and inputting the shoe-last data, an operation condition generation step of generating an operation condition of the nozzle based on the setting data and the shoe-last data, and a shaping step of forming the upper by operating the nozzle according to the operation condition and randomly layering the one or plurality of molten fine strands on the shoe-last.

The third method of manufacturing the upper is a method of manufacturing an upper of a shoe formed from a web having one or a plurality of randomly layered thermoplastic fine strands by using a 3D printer. The method includes a setting data input step of inputting setting data of a thickness and an apparent density of the web according to a portion of the upper, a shoe-last data generation step of generating shoe-last data by measuring a foot shape of a user, an operation condition generation step of generating an operation condition of the 3D printer based on the setting data and the shoe-last data, and a 3D print step of forming an upper by operating the 3D printer according to the operation condition.

### EFFECTS OF THE INVENTION

The shoe of the present invention includes the upper that is excellent in air permeability and quick-drying properties, and has good cushioning properties.

Further, according to the manufacturing method of the present invention, the upper which is excellent in air permeability and quick-drying properties and has good cushioning properties can be easily prepared.

### BRIEF DESCRIPTION OF THE DRAWINGS

Fig. 1 is a perspective view of a shoe according to a first embodiment of the present invention.
Fig. 2 is a plan view of the shoe.
Fig. 3 is a cross-sectional view taken along line III-III of Fig. 2.
Fig. 4 is a plan view of a web formed in a developed shape of an upper.
Fig. 5A is a reference plan view schematically showing a first region constituted by a thermoplastic fine strand having a small diameter, and Fig. 5B is a reference plan view schematically showing a first region constituted by a thermoplastic fine strand having a large diameter.
Fig. 6 is a reference end view in which the first region is cut along line VI-VI of Fig. 5A and a part of the cut surface is enlarged.
Fig. 7 is an enlarged photograph of a first region of a prototype constituted by a thermoplastic fine strand.
Fig. 8 is a photograph of the first region of the prototype viewed from a thickness direction.
Figs. 9A and 9B show schematic views for describing a first region constituted by thermoplastic fine strands, Fig. 9A is a reference exploded view of a plurality of thermoplastic fine strands constituting the first region, and Fig. 9B is a reference plan view of a state in which the thermoplastic fine strands are randomly layered.
Fig. 10 is a reference plan view schematically showing a second region.
Fig. 11 is a reference end view in which the second region is cut along line XI-XI of Fig. 10 and a part of the cut surface is enlarged.
Fig. 12 is an enlarged photograph of a second region of a prototype.
Fig. 13 is a schematic view of a manufacturing apparatus of a raw fabric web.
Fig. 14 is a bottom view of a nozzle viewed from a direction of arrow XIV in Fig. 13.
Fig. 15 is a rear view of the manufacturing apparatus viewed from a direction of arrow XV in Fig. 13.
Fig. 16 is a top view of the manufacturing apparatus viewed from a direction of arrow XVI in Fig. 13.
Fig. 17 is a reference diagram showing a procedure for preparing an upper from a raw fabric web.
Figs. 18A and 18B are a reference diagram showing a procedure for forming a web using a shoe-last.
Fig. 19 is a perspective view of a shoe according to a second embodiment.
Fig. 20 is an enlarged end view cut along line XX-XX of Fig. 19.
Fig. 21 is a cross-sectional view of a shoe according to a third embodiment.
Fig. 22 is a perspective view of a shoe according to a fourth embodiment.
Fig. 23 is an end view cut along line XXIII-XXIII in Fig. 22.

### EMBODIMENTS OF THE INVENTION

Hereinafter, the present invention will be described with reference to the drawings.

In the present specification, a term "upper" indicating directionality refers to a side farther from a ground with a case where a shoe is used as a reference, a term "lower" refers to a side closer to the ground, a term "tip" refers to a toe side, and a term "rear" refers to a heel side. A term of "plurality of" means two or more.

In the present specification, a numerical range represented by "lower limit value XXX to upper limit value YYY" means a lower limit value XXX or more and an upper limit value YYY or less. When the numerical range is separately described in plural, it is assumed that any lower limit value and any upper limit value are selected and "any lower limit value to any upper limit value" can be set.

It should be noted that dimensions, scales, and shapes of members or portions constituting structures shown in the respective drawings may differ from actual dimensions, scales, and shapes.

### [FIRST EMBODIMENT]

### <Outline of shoe>

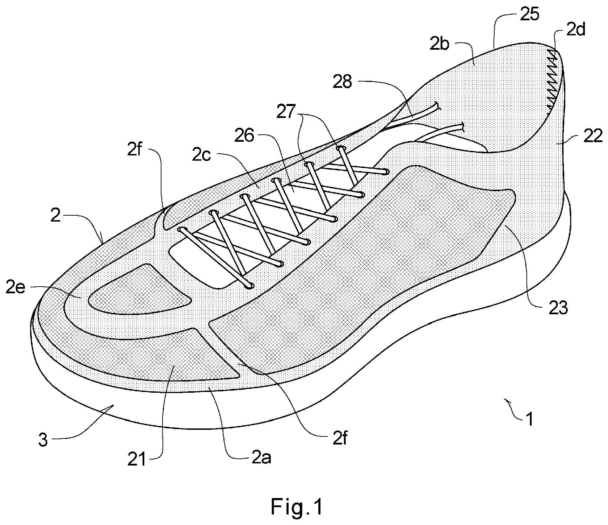

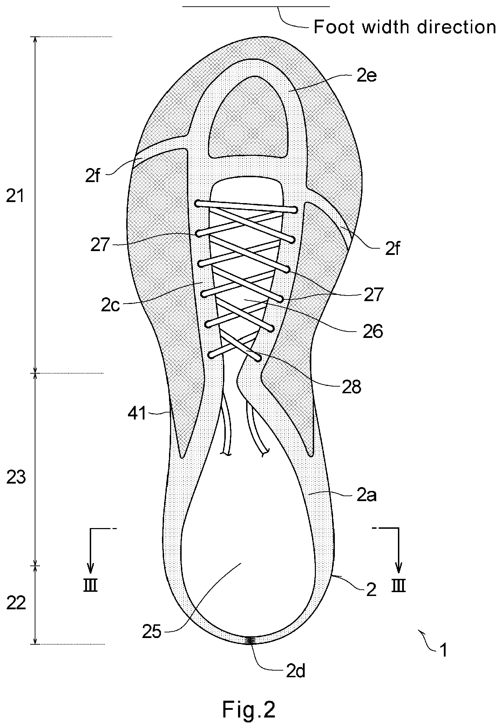

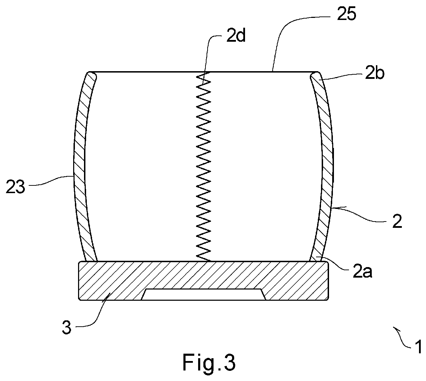

Fig. 1 is a perspective view of a shoe 1 of a first embodiment, Fig. 2 is a plan view of the shoe 1 viewed from above, and Fig. 3 is a partial cross-sectional view of the shoe 1.

The shoe 1 of the present invention has an upper 2 and a sole 3.

The upper 2 is formed from a web 41 containing one or a plurality of randomly layered thermoplastic fine strands. The web 41 has a first region and a second region. In Figs. 1, 2, and 4, in order to easily distinguish the first region from the second region, the first region of the web 41 is shaded and the second region of the web 41 is dotted.

The first region is a region in which the randomly layered thermoplastic fine strands are point-bonded to each other at contact portions thereof. A diameter of the thermoplastic fine strand in the first region ranges from 0.2 mm to 2 mm, and an apparent density in the first region ranges from 0.005 g/cm³ to 0.2 g/cm³. The second region is a region in a sheet form in which the thermoplastic fine strand is fused. The second region has an apparent density higher than that in the first region.

The upper 2 of the shoe 1 of the present invention has the first region in which thermoplastic fine strands having a diameter of 0.2 mm to 2 mm are randomly layered and an apparent density is 0.005 g/cm³ to 0.2 g/cm³. The first region is very bulky, has a very small occupancy percentage of the fine strands per unit area, and is excellent in air permeability. Moreover, the first region dries in a short time even when the first region gets wet with water, and is excellent in quick-drying properties. Further, the bulky first region has excellent elasticity in a thickness direction and has good cushioning properties.

In the first region, since the thermoplastic fine strands are randomly layered while partially intersecting each other and are point-bonded at the contact portions thereof, the upper 2 is not broken even though a tearing force is applied when the shoe 1 is used. In particular, since the web 41 constituting the upper 2 has the second region in the sheet form to which the thermoplastic fine strands are fused in addition to the first region, the web has good strength. The shoe 1 having the upper 2 hard to be broken has excellent durability and can be used for a long period of time.

The shoe 1 of the present invention can be used, for example, when light sports such as walking, trekking, and running are performed. Further, since the shoe 1 of the present invention has excellent quick-drying properties, the shoe 1 can be suitably used when water sports such as canoeing, yachting, pleasure boating, windsurfing, and sea-walking are performed. Note that, the shoe 1 of the present invention may be used not only in a case where the shoe is used when various sports are performed, but also in a case where the shoe is used in daily life.

The shoe 1 includes a pair of left and right shoes for the left foot and the right foot. Hereinafter, a specific embodiment of the shoe 1 including the upper 2 will be described with reference to the drawings, but the shoe 1 for the left foot is illustrated for the sake of convenience in description in the respective drawings. The shoe 1 for the right foot is not shown since the shoe for the right foot is symmetrical with the shoe 1 for the left foot.

### <Sole>

The sole 3 is a constituent member of the shoe 1 including a portion that touches the ground. Conventionally known materials and structures can be adopted as a material and a structure of the sole 3.

For example, the material of the sole 3 includes rubber, an elastomer, a synthetic resin, or a mixture thereof. The sole 3 may be a foam, a non-foam, or a laminate of the foam and the non-foam.

The structure of the sole 3 may be a one-layer structure or a multilayer structure having two or more layers. The sole 3 having the multilayer structure includes, for example, an outsole that is a portion that touches the ground and a midsole that is layered on an upper surface side of the outsole.

If necessary, any appropriate unevenness is formed on a lower surface (a portion that touches the ground) of the sole 3.

### <Upper>

The upper 2 is a constituent member of the shoe 1 that covers an instep part and a heel part of the foot.

A lower edge portion 2a of the upper 2 is attached around the sole 3. A method of attaching the lower edge portion 2a of the upper 2 to the sole 3 is not particularly limited, and a conventionally known method can be adopted, and includes, for example, adhesion using an adhesive and sewing. Note that, when the upper 2 and the sole 3 are made of a material that can be heat-fused, the upper 2 may be attached to the sole 3 by heat fusion.

When the upper 2 is roughly classified for each part, the upper 2 includes an instep corresponding portion 21 corresponding to the instep part, a heel corresponding portion 22 corresponding to the heel part of the foot, and an intermediate portion 23 between the instep corresponding portion 21 and the heel corresponding portion 22. The instep corresponding portion 21 is a portion that includes a front end part of the foot (a toe part of the foot) and covers the instep part of the foot, the heel corresponding portion 22 is a portion that includes a rear end part of the foot and covers the heel part of the foot, and the intermediate portion 23 is a remaining portion excluding the instep corresponding portion 21 and the heel corresponding portion 22 from the upper 2. Referring to Fig. 2, the instep corresponding portion 21, the intermediate portion 23, and the heel corresponding portion 22 are arranged in this order from the front.

Here, the instep part and the heel part of the foot can be specified based on a skeletal structure of a standard human body. The instep part of the foot is a part of first to fifth proximal phalanges and first to fifth metatarsals of a standard human foot, and a heel part of the foot is a part of a posterior end part of a heel bone.

A foot insertion portion 25 for inserting a foot of a user is opened in an upper side of the upper 2. The foot insertion portion 25 is defined by an upper edge portion 2b of the upper 2. An opening portion 26 extending in a front-rear direction is formed so as to communicatively connected to the foot insertion portion 25. The opening portion 26 is defined by an upper front edge portion 2c of the upper 2. The upper front edge portion 2c is an edge portion that extends forward continuously from the upper edge portion 2b, and is, for example, a substantially U-shaped edge portion in plan view. A plurality of eyelet holes 27 is formed side by side in the front-rear direction in the plane of the upper front edge portion 2c. A shoelace 28 passes through the eyelet holes 27. Note that, in the respective drawings, a part of the shoelace 28 is omitted.

The eyelet holes 27 may be regularly arranged or may be randomly arranged along the upper front edge portion 2c. As will be described later, the eyelet holes 27 are preferably formed in the second region.

Note that, although not shown, the shoelace may pass (voids) between thermoplastic fine strands 5 constituting the first region without forming eyelet holes. Alternatively, when the eyelet holes are not formed and the second region has holes C as will be described later, the shoelace may pass through the holes C.

Further, although not shown, the upper 2 may have a shoe tongue, if necessary. The shoe tongue is a portion that extends continuously in a tongue shape from an anterior portion of the upper front edge portion 2c that defines the opening portion 26. The shoe tongue is provided, and thus, it is possible to prevent the instep part of the foot from being exposed from the substantially U-shaped opening portion 26.

Note that, although the upper 2 of a type to which the shoelace 28 is attached is illustrated in the illustrated example, the upper 2 of the present invention is not limited to the type to which the shoelace 28 is attached, and may be a type having no shoelace (not shown). Further, although the upper 2 of the type having the opening portion 26 is illustrated in the illustrated example, the upper 2 of the present invention may be a type having no opening portion (not shown).

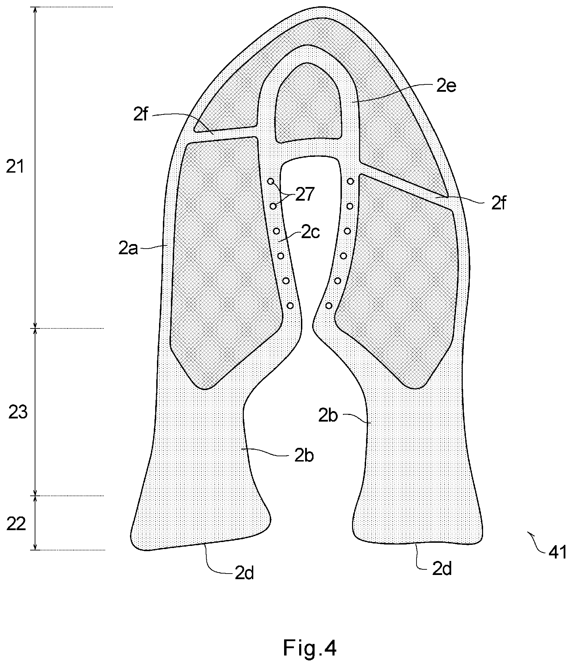

The upper 2 is formed by three-dimensionally forming a flexible web 41. The upper 2 may be formed by three-dimensionally assembling one web 41 formed in a predetermined shape, or may be formed by three-dimensionally assembling a plurality of webs 41 formed in a predetermined shape while joining the webs. The upper 2 of the illustrated example is three-dimensionally formed by three-dimensionally bending one web 41 formed in a developed shape of the upper 2 shown in Fig. 4 and joining rear edges 2d and 2d of the web 41 (sewing and adhesion using an adhesive). The edges such as the rear edges 2d and 2d of the web 41 may be joined by fusing heat-shrinkable fine strands 5.

### <Web having first region and second region>

The web 41 constituting the upper 2 has the first region in which one or the plurality of thermoplastic fine strands is point-bonded to each other at the contact portions thereof and the second region in which one or the plurality of thermoplastic fine strands is fused. The second region has the apparent density higher than that in the first region. The web 41 may have a region other than these regions under the condition in which the first region and the second region are provided.

Both the first region and the second region are formed by the thermoplastic fine strands as a common feature, but the first region in which a three-dimensional shape of the fine strand is maintained is different from the second region formed in the sheet form in which the fine strand is fused and the three-dimensional shape thereof disappears or is deformed.

From a structural point of view, the thermoplastic fine strand is a very long mono-fine strand(single fiber). The mono-fine strand is an elongated thread including a single fiber. A cross-sectional shape of the thermoplastic fine strand is not particularly limited and is usually a substantially circular shape, but may be a substantially triangular shape, a substantially quadrangular shape, or the like. In the present invention, the thermoplastic fine strand having the diameter ranging from 0.2 mm to 2 mm is used, preferably a thermoplastic fine strand having a diameter ranging from 0.5 mm to 1.8 mm is used, and more preferably a thermoplastic fine strand having a diameter ranging from 1.0 mm to 1.5 mm is used. When a fine strand having a diameter of less than 0.2 mm is used, there is a concern that the strength of the first region becomes too low, and there is a concern that the bulky first region cannot be maintained for a long period of time. When a fine strand having a diameter of more than 2 mm is used, there is a concern that the cushioning properties of the first region are deteriorated, and there is a concern that a feeling comfortable to wear the shoe 1 is deteriorated. Note that, although the diameter is based on a case where the cross-sectional shape of the fine strand is substantially circular, when the cross-sectional shape of the fine strand is not substantially circular, the diameter is set to a diameter equivalent to a circle.

The thermoplastic fine strands may all have the same diameter or may have different diameters. A case where the diameters are different mean a case where a part of one thermoplastic fine strand has a large diameter in a longitudinal direction or a case where some thermoplastic fine strands of the plurality of thermoplastic fine strands have diameters larger than those of the other thermoplastic fine strands.

From a material point of view, the thermoplastic fine strand is made of a polymer having thermoplasticity. Examples of the polymer having thermoplasticity (thermoplastic polymer) include a thermoplastic resin and a thermoplastic elastomer. The elastomer is a polymer having rubber elasticity, and the resin is a polymer having substantially no rubber elasticity.

A melting point of the thermoplastic polymer (thermoplastic fine strand) is not particularly limited as long as the melting point is equal to or higher than a using temperature of the shoe 1, and is, for example, 80°C or higher, preferably 100°C or higher, and more preferably 110°C or higher. Although there is no particular upper limit to the melting point of the thermoplastic polymer (thermoplastic fine strand), since the thermoplastic polymer needs to be melted at a very high temperature when the fine strand is spun, the melting point is preferably, for example, 250°C or lower, and more preferably 200°C or lower.

Examples of the thermoplastic resin include polyester-based resins such as polyethylene terephthalate; olefin-based resins such as polyethylene (PE) and ethylene-vinyl acetate copolymer resin (EVA resin); urethane-based resins such as polyurethane; styrene-based resins such as polystyrene (PS), acrylonitrile styrene copolymer resin (AS resin), and acrylonitrile butadiene styrene copolymer resin (ABS resin); polyvinyl chloride (PVC), and the like. Examples of the thermoplastic elastomer include ethylene-vinyl acetate copolymer-based elastomers; styrene-based elastomers such as styrene ethylene butylene styrene block copolymer (SEBS); olefin-based elastomers; urethane-based elastomers; polyester-based elastomers; and the like. These materials can be used alone or in combination of two or more.

Since a hydrophobic thermoplastic polymer is excellent in quick-drying properties, the hydrophobic thermoplastic polymer is preferably used. Further, since the polyester-based resin or the polyester-based elastomer has excellent durability and an appropriate melting point, the thermoplastic fine strand containing the polyester-based resin or the polyester-based elastomer as a main component is preferably used, and since the polyester-based elastomer has an appropriate elasticity, the thermoplastic fine strand containing the polyester-based elastomer a main component is more preferably used.

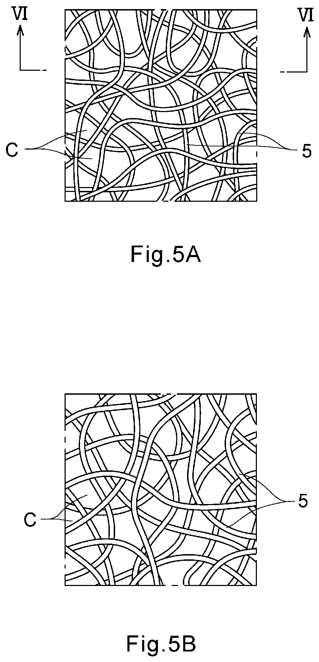

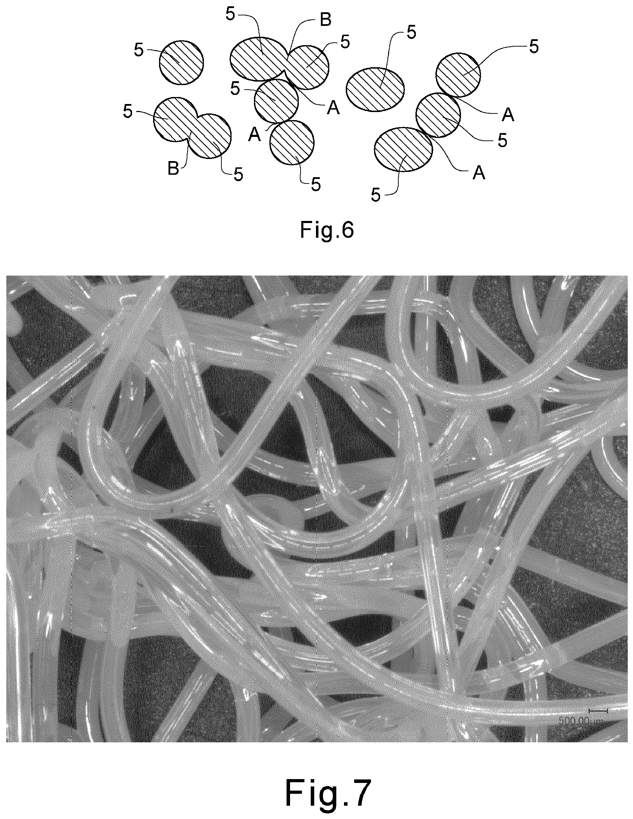

Figs. 5A and 5B are reference plan views schematically showing the first region, and Fig. 6 is a reference end view schematically showing the first region. Note that, the end view is a view that shows a shape of only a cut surface and does not show a shape on a back side of the cut surface.

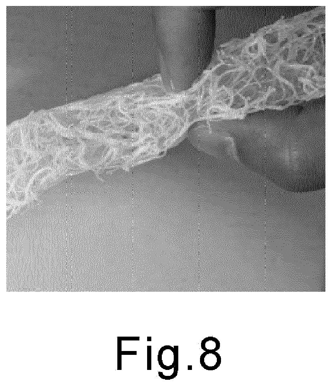

Fig. 7 is an enlarged photograph (magnification of 30 times) obtained by photographing the first region of the actually prototyped web 41 from an upper surface side thereof, and Fig. 8 is a photograph obtained by photographing the first region of the actually prototyped web 41 on a thickness direction side.

Referring to Figs. 5A to 8, the first region of the web 41 is a region in which the thermoplastic fine strands 5 are layered in the thickness direction and are point-bonded to each other. In the first region, the three-dimensional shape (elongated mono-fine strand shape) of the thermoplastic fine strand 5 is maintained.

Referring to Figs. 5A, 5B, and 7, the thermoplastic fine strands 5 constituting the first region meander or bend irregularly in a plane direction in plan view. Referring to Figs. 6 and 8, the thermoplastic fine strands 5 constituting the first region are randomly (disorderly) layered in the thickness direction, and the respective thermoplastic fine strands 5 are partially in contact with each other in the plane direction and the thickness direction. The thermoplastic fine strands 5 are point-bonded at the contact portions. The point-bonding means that the thermoplastic fine strands 5 are partially fused to each other. As shown in Fig. 6, the respective thermoplastic fine strands 5 have locations at which the fine strands are point-bonded while maintaining the shapes of the fine strands (indicated by reference numeral A in Fig. 6), and also have locations at which the fine strands are point-bonded in a state in which the shapes of the fine strands are slightly collapsed (indicated by reference numeral B in Fig. 6). Note that, in Fig. 6, the cross-sectional shape of a part of the thermoplastic fine strands 5 is elliptical, but this cross-sectional shape is a cross-sectional shape of the thermoplastic fine strand 5 diagonally present at an acute angle with respect to line VI-VI of Fig. 5A.

The first region may be formed from one kind of thermoplastic fine strands 5 or may be formed from two or more kinds of thermoplastic fine strands 5 having different diameters.

Fig. 5A shows the first region constituted by the point-bonded thermoplastic fine strands 5 having a predetermined diameter ranging from 0.2 mm to 2 mm, and Fig. 5B shows the first region constituted by the point-bonded thermoplastic fine strands 5 having a diameter ranging from 0.2 mm to 2 mm which is larger than that of the thermoplastic fine strand 5 of Fig. 5B.

The first region of the web 41 may be formed from only one kind of thermoplastic fine strands 5 as shown in Fig. 5A or 5B. Further, the first region of the web 41 may have, for example, a region constituted by the thermoplastic fine strands 5 having a relatively small diameter shown in Fig. 5A and a region constituted by the thermoplastic fine strands 5 having a relatively large diameter shown in Fig. 5B. Moreover, although not particularly shown, the first region of the web 41 may be a region in which two or more kinds of thermoplastic fine strands 5 having different diameters are randomly layered and point-bonded.

In the present invention, the apparent density of the first region ranges from 0.005 g/cm³ to 0.2 g/cm³, preferably ranges from 0.01 g/cm³ to 0.15 g/cm³, and more preferably ranges from 0.05 g/cm³ to 0.1 g/cm³. The first region having the apparent density in the above range has a plurality of relatively large voids C (the voids C are formed between the fine strands 5) and is very bulky. The first region is not only excellent in air permeability and quick-drying properties, but also has good cushioning properties.

Note that, a basis weight of the first region is 0.005 g/cm² to 0.2 g/cm² which is numerically the same as the apparent density of the first region.

Here, the apparent density means a weight per unit volume, and the basis weight means a weight per unit area.

As for the apparent density, a sample was obtained by cutting a measurement target into 20 cm × 20 cm, a thickness and a weight of the sample were measured, and the weight per unit volume was obtained as the apparent density. The thickness of the sample can be measured by using a caliper (for example, a caliper having a claw length of 20 mm or more).

The first regions of the web 41 may all have the same apparent density (or basis weight), or the apparent density (or basis weight) may be partially different. A case where the apparent density is partially different includes a case where the apparent density of a part of the first region is higher than the apparent density of the other part.

For example, two or more kinds of thermoplastic fine strands 5 having different diameters are used, and the basis weight of the first region formed by the thermoplastic fine strands 5 having a larger diameter is larger than a basis weight of the first region formed by the thermoplastic fine strands 5 having a smaller diameter under the condition that the number of fine strands per unit area is the same.

A thickness of the first region is not particularly limited, but there is a concern that the cushioning properties are deteriorated when the thickness is too small and a feeling comfortable to wear the shoe 1 is deteriorated when the thickness is too large. From this point of view, the thickness of the first region is, for example, 5 mm to 30 mm, preferably 10 mm to 30 mm, and more preferably 15 mm to 25 mm. The thickness of the first region can be measured by using a caliper (for example, a caliper having a claw length of 20 mm or more).

Referring to Fig. 8, the bulky first region having the above thickness is compressed when the first region is pressed with a finger, but is restored almost to the original thickness when the pressing is released. The first region is formed by randomly layering thermoplastic fine strands 5 having a diameter of 0.2 mm to 2 mm and point-bonding the fine strands at an apparent density of 0.005 g/cm³ to 0.2 g/cm³, and thus, such a restoring force is caused. In addition to excellent air permeability and quick-drying properties, such a first region has good cushioning properties, is hard to be crushed even after the first region is used for a long period of time, and can maintain good cushioning properties for a long period of time.

The first region may have anisotropy in tensile strength, or may not have anisotropy in tensile strength.

The tensile strength refers to a difficulty of breaking when a tearing force is applied in the plane of the first region. Specifically, the tensile strength is strength when the first region is broken by grasping one end portion and an opposite end portion of the first region in the plane direction with a chuck of a tensile tester and pulling the one end portion and the opposite end portion so as to be separated from each other.

A case where the first region has anisotropy in tensile strength means that the tensile strength in a certain direction in the plane is higher than the tensile strength in a direction orthogonal to the certain direction. A case where the first region has no anisotropy in tensile strength means that the tensile strength does not differ in any direction in the plane.

Preferably, the first region has anisotropy in tensile strength.

The first region having anisotropy in tensile strength has a high tensile strength along a flow direction of the thermoplastic fine strand 5 and a low tensile strength along a direction orthogonal to the flow direction of the thermoplastic fine strand 5. Preferably, the first region has the highest tensile strength along the flow direction of the thermoplastic fine strand 5 and the lowest tensile strength along the direction orthogonal to the flow direction of the thermoplastic fine strand 5.

The first region having anisotropy in tensile strength depends on a method of preparing the web to be described later, but is caused by the following structure.

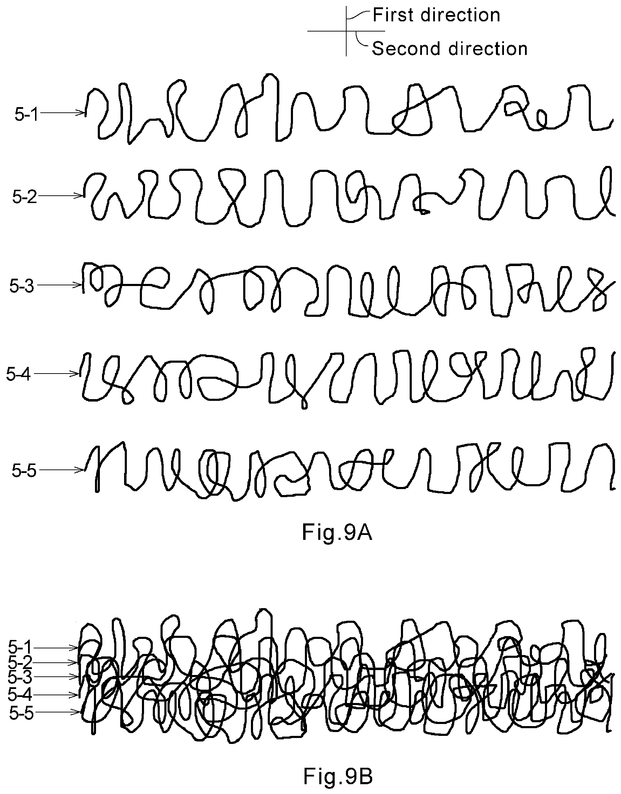

Figs. 9A and 9B are a schematic diagram for specifically describing the first region constituted by the plurality of thermoplastic fine strands. Fig. 9A shows a state in which the plurality of thermoplastic fine strands constituting the first region is separated, and Fig. 9B is a reference plan view of a state in which the thermoplastic fine strands are randomly layered (reference plan view of the first region).

Referring to Fig. 9A, individual thermoplastic fine strands 5-1, 5-2, 5-3, 5-4, and 5-5 constituting the first region meander or bend irregularly in plan view, but are a long mono-fine strand that extends in a first direction (flow direction) as a whole. The first region is obtained by partially layering the plurality of thermoplastic fine strands 5-1, 5-2, 5-3, 5-4, and 5-5 extending by meandering or bending in the first direction (flow direction) in a second direction and point-bonding the thermoplastic fine strands at contact portions as shown in Fig. 9B. Note that, the second direction is the direction orthogonal to the first direction (flow direction).

In such a first region, the tensile strength in the first direction is higher than the tensile strength in the second direction.

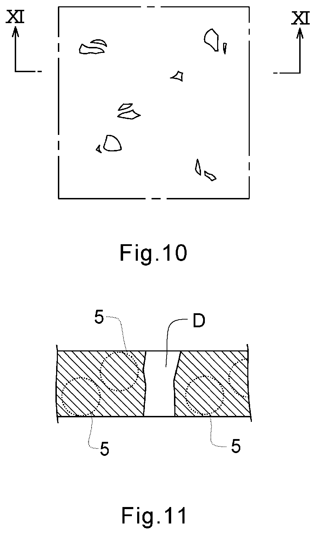

Fig. 10 is a reference plan view schematically showing the second region, and Fig. 11 is a reference end view schematically showing the second region.

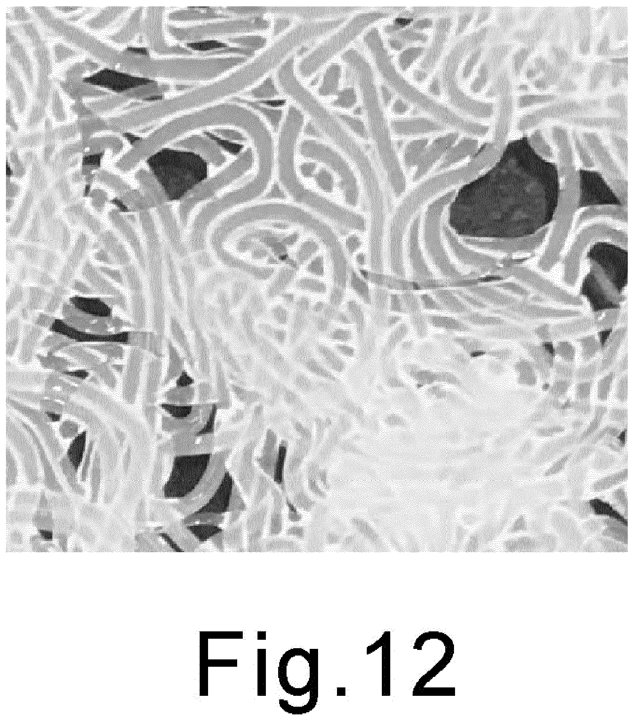

Fig. 12 is an enlarged photograph (magnification of 30 times) obtained by photographing the second region of the actually prototyped web 41 from an upper surface side thereof.

Referring to Figs. 10 to 12, the second region is formed in the sheet form in which the thermoplastic fine strands 5 are fused. The second region may be in the sheet form having a partially small hole D. The hole has an irregular shape in plan view.

The second region is a region formed in the sheet form by heating and melting the thermoplastic fine strands 5 randomly layered in the thickness direction. In the second region, the three-dimensional shape (elongated mono-fine strand shape) of the thermoplastic fine strand 5 disappears or is deformed. However, as shown in Fig. 11, there are some locations at which the shape of the thermoplastic fine strand 5 is slightly deformed and is maintained in the second region. As shown in Fig. 12, an outer shape of the thermoplastic fine strand 5 can be visually recognized from the outside of the second region, but there is a location at which the three-dimensional shape (fiber shape) of each thermoplastic fine strand 5 disappears or there is also a location at which the three-dimensional shape thereof is deformed. In other words, the second region is in the sheet form made of the thermoplastic polymer (the same material as that of the thermoplastic fine strand 5).

The second region is in the sheet form having substantially no voids inside. The apparent density of the second region is sufficiently higher than the apparent density of the first region. The apparent density of the second region is not particularly limited to a specific numerical value.

As will be described later, the second region is a region formed in the sheet form by heating and pressurizing a web in which thermoplastic fine strands having a diameter of 0.2 mm to 2 mm are randomly layered. Thus, from a structural point of view, the second region is in the sheet form having substantially no voids (or a sheet having small holes at some locations). Further, from a material point of view, the second region is made of the same material as that of the first region. Moreover, the basis weight of the second region ranges from 0.005 g/cm² to 0.2 g/cm².

The thickness of the second region is not particularly limited, and is, for example, 0.2 mm to 3 mm, and preferably 0.5 mm to 2 mm.

### <Arrangement of first region and second region in upper>

Referring to Figs. 1 to 4, the first region and the second region are respectively arranged at any portions of the upper 2.

When the first region has anisotropy in tensile strength, a direction in which the tensile strength is high is preferably aligned with a foot width direction of the upper 2. For example, the web 41 is formed in a predetermined shape as shown in Fig. 4 such that the flow direction (first direction) of the thermoplastic fine strand 5 in the first region is the foot width direction of the upper 2. A relatively large tearing force is applied to the upper 2 in the foot width direction, but durability can be improved by aligning the direction in which the tensile strength is high with the foot width direction of the upper 2.

For example, the instep corresponding portion 21 in whole or part of the upper 2 is formed by the first region, and the heel corresponding portion 22 in whole or part of the upper 2 is formed by the second region. As described above, since the apparent density of the first region is lower than the apparent density of the second region, the apparent density of the instep corresponding portion 21 in whole or part is lower than the apparent density of the heel corresponding portion 22.

Specifically, the upper edge portion 2b of the upper 2 is formed entirely by the second region. The upper edge portion 2b of the upper 2 defines the foot insertion portion 25, and a load is applied when the user puts on the shoe 1. The upper edge portion 2b is formed by the second region having excellent strength, and thus, the durability of the upper 2 can be improved.

Further, the upper front edge portion 2c of the upper 2 is also formed by the second region as a whole. Since the upper front edge portion 2c of the upper 2 defines the opening portion 26, and the eyelet holes 27 are formed in the plane of the upper front edge portion 2c, a load is applied when the user ties the shoelace 28. The upper front edge portion 2c is formed by the second region having excellent strength, and thus, the durability of the upper 2 can be improved.

Moreover, the lower edge portion 2a of the upper 2 is also formed by the second region as a whole. The lower edge portion 2a of the upper 2 is a portion to be attached to the sole 3, and the upper 2 can be firmly attached to the sole 3 by forming the lower edge portion 2a by the second region having excellent strength.

The instep corresponding portion 21 of the upper 2 is formed by the first region except for the upper front edge portion 2c and the lower edge portion 2a. If necessary, a part of the instep corresponding portion 21 may be formed by the second region. For example, at the instep corresponding portion 21 of the upper 2, an annular portion 2e extending continuously to the upper front edge portion 2c in a toe direction is formed by the second region. Further, at the instep corresponding portion 21 of the upper 2, a band-shaped portion 2f extending in the foot width direction so as to bridge from the upper front edge portion 2c to the lower edge portion 2a is formed by the second region.

Since the instep corresponding portion 21 of the upper 2 is formed by the first region, air permeability for the instep part of the foot can be ensured.

A part of the heel corresponding portion 22 of the upper 2 may be formed by the second region, but the entire heel corresponding portion 22 is preferably formed by the second region. The heel corresponding portion 22 is a portion that covers an ankle in cooperation with the intermediate portion 23, and the upper 2 that firmly fits the foot can be formed by forming the entire heel corresponding portion 22 by the second region. Note that, the intermediate portion 23 is formed from the first region and the second region.

From an air permeability point of view, the apparent density of the web 41 constituting the instep corresponding portion 21 is preferably lower than the apparent density of the web 41 constituting the heel corresponding portion 22. As the apparent density becomes low, a plurality of large voids is formed. Thus, the air permeability is improved. The instep corresponding portion 21 is a portion that covers the instep part of the foot including toes easy to be stuffy, and since the instep corresponding portion 21 is excellent in air permeability, the feel of use of the shoe 1 is improved.

Further, from a strength point of view, the basis weight of the web 41 constituting the instep corresponding portion 21 is preferably larger than the basis weight of the web 41 constituting the heel corresponding portion 22. In terms of strength, the second region is superior to the first region. On the other hand, when the instep corresponding portion 21 in whole or part is formed by the first region in order to ensure air permeability, the strength of the instep corresponding portion 21 is lower than that of the heel corresponding portion 22 formed from the second region. As a method for improving the strength of the instep corresponding portion 21 formed from the first region, there is a method for forming a part of the instep corresponding portion 21 by the second region as described above (for example, a method for forming the annular portion 2e extending in the toe direction by the second region, a method for forming the band-shaped portion 2f extending in the foot width direction by the second region, and the like as described above). On the other hand, the strength of the instep corresponding portion 21 can also be improved by increasing the basis weight of the instep corresponding portion 21 to be larger than the basis weight of the heel corresponding portion 22.

As a method of increasing the basis weight of the instep corresponding portion 21 to be larger than that of the heel corresponding portion 22, there are (a) a method of using the thermoplastic fine strand 5 constituting the instep corresponding portion 21 having the diameter lager than that of the thermoplastic fine strand 5 constituting the heel corresponding portion 22, (b) a method of densely layering the thermoplastic fine strands 5 constituting the instep corresponding portion 21 to be more than the thermoplastic fine strands 5 constituting the heel corresponding portion 22, and the like.

### <First manufacturing method>

The upper 2 can be obtained by various methods.

A first manufacturing method of the upper 2 includes a step of preparing a raw fabric web and a step of preparing an upper from the raw fabric web.

In the step of preparing the raw fabric web, a raw fabric web having an apparent density ranging from 0.005 g/cm³ to 0.2 g/cm³ is obtained by discharging one or a plurality of molten fine strands having a diameter of 0.2 mm to 2 mm from nozzles, randomly layering the fine strands, and point-bonding the fine strands to each other at contact portions thereof.

In the step of preparing the upper, a region having an apparent density higher than 0.2 g/cm³ is formed by heating any location of the raw fabric web to fuse the fine strands.

The details will be described below.

### <<Preparation of raw fabric web>>

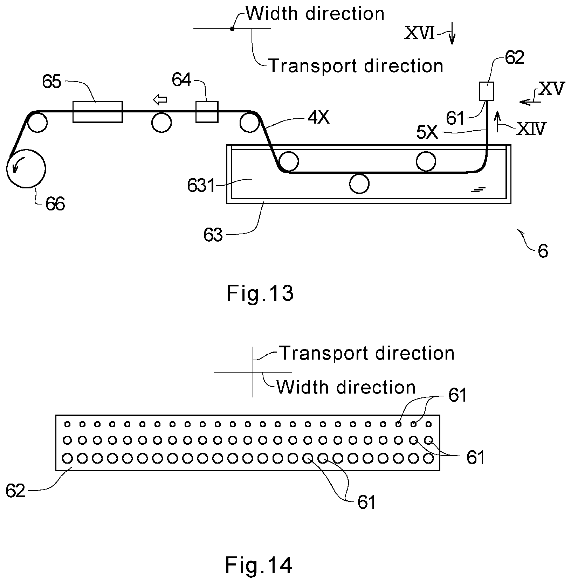

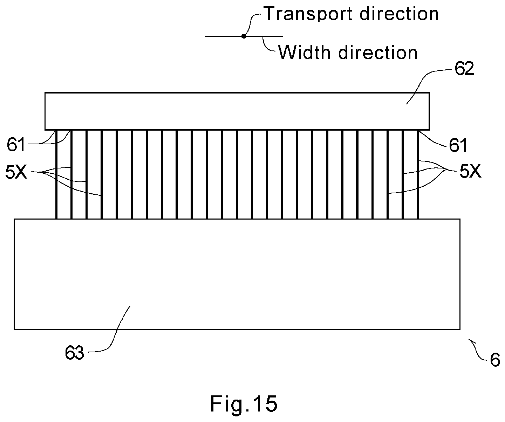

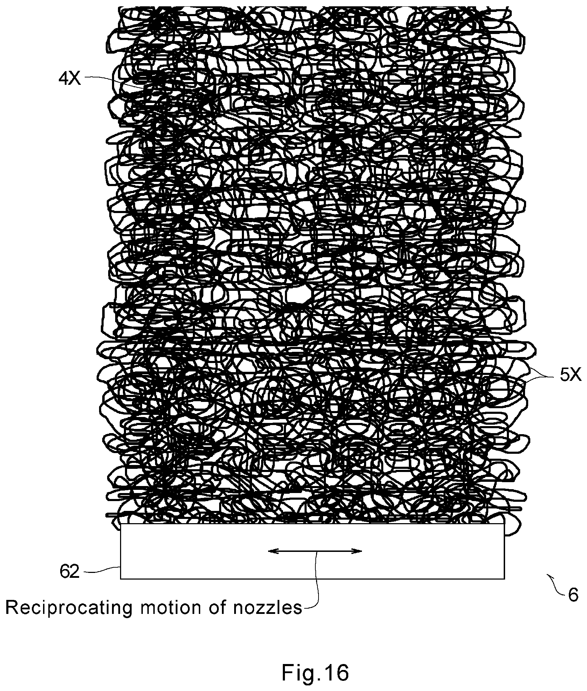

Fig. 13 is a schematic view showing a manufacturing apparatus 6 of the raw fabric web, Fig. 14 is a diagram of a die 62 having nozzles 61 viewed from below, Fig. 15 is a diagram of the manufacturing apparatus 6 viewed from the back, and Fig. 16 is a diagram of the manufacturing apparatus 6 viewed from above.

Referring to Figs. 13 to 16, the manufacturing apparatus 6 of the raw fabric web includes the die 62 having the nozzles 61 for discharging molten fine strands 5X, a tank 63 filled with water 631, a dryer 64, an annealing machine 65, and a winding portion 66.

The molten fine strands 5X are discharged from the nozzles 61, and are supplied to the tank 63. A raw fabric web 4X is formed by layering the fine strands 5X, and the raw fabric web 4X is finally wound around the winding portion 66. In Fig. 13, a transport direction of the raw fabric web 4X is indicated by white arrow.

An extruder (the extruder is not shown) that melts and extrudes the thermoplastic polymer is connected to the die 62. The thermoplastic polymer extruded from the extruder becomes the molten fine strands 5X, and the molten fine strands are discharged from the nozzles 61. An elongated fiber shape of the molten fine strand 5X is maintained, but is in a state in which the thermoplastic polymer is unsolidified.

In the illustrated example, a plurality of nozzles 61 is provided at one die 62. The nozzles 61 are openings formed in the die 62. The plurality of nozzles 61 may all have the same diameter, or may have different diameters as shown in Fig. 14. In the illustrated example, a plurality of nozzles 61 having a certain diameter is arranged side by side in a width direction of the manufacturing apparatus 6 (the width direction is a direction orthogonal to the transport direction of the raw fabric web 4X), another nozzles 61 having a diameter larger than that of the plurality of nozzles 61 are arranged in the width direction of the manufacturing apparatus 6, and the other nozzles 61 having a diameter larger than that of the another nozzles 61 are arranged side by side in the width direction of the manufacturing apparatus 6. Note that, the diameter of the nozzle 61 is appropriately selected from 0.2 mm to 2 mm in diameter.

The extruder may be configured to independently supply polymers to the nozzles 61 by branching in the middle. Alternatively, the extruder may be configured to group several nozzles 61 as one group and supply the polymer to each group. Alternatively, the extruder may be configured to simultaneously supply the polymers to all the nozzles 61. Since the fine strands 5X can be discharged or stopped for each nozzle 61 or for each group, the polymer is preferably supplied from the extruder for each nozzle 61 or for each group.

The water 631 is contained as a cooling medium in the tank 63.

The dryer 64 is a device for removing the water adhering to the raw fabric web 4X drawn from the tank 63. The annealing machine 65 is a device that heats the raw fabric web 4X in order to more firmly point-bond the contact portions of the fine strands.

Referring to Figs. 13, 15, and 16, the molten fine strands 5X are discharged from the nozzles 61 by supplying the molten thermoplastic polymer from the extruder to the plurality of nozzles 61. A diameter of the discharged fine strand 5X is substantially equal to the diameter of the nozzle 61, and ranges from 0.2 mm to 2 mm.

A melting temperature can be appropriately set according to the kind of the thermoplastic polymer, and is, for example, equal to or higher than a melting point of the polymer, preferably melting point +20°C to melting point +100°C.

The plurality of fine strands 5X discharged from the respective nozzles 61 falls into the water of the tank 63, and are randomly layered while meandering or bending. When the molten fine strands 5X are layered and come into contact with each other, the fine strands are point-bonded at the contact portions thereof, and the raw fabric web 4X is formed in the water of the tank 63. The fine strands 5X cooled in the water are solidified, and the above-mentioned thermoplastic fine strands 5 are obtained.

As indicated by arrow in Fig. 16, the fine strands 5X are preferably discharged while moving the nozzles 61 (die 62) in a reciprocating motion in the width direction of the manufacturing apparatus 6. This is because the plurality of fine strands 5X discharged from the nozzles 61 is likely to meander or bend and the fine strands 5X are more likely to come into contact with each other and be point-bonded at the portions. Note that, since the movement of the nozzle 61 may include movement in the width direction, for example, the nozzles 61 (die 62) may be moved so as to draw a circle or an ellipse.

The sequentially formed raw fabric web 4X is wound by the winding portion 66, and thus, the raw fabric web 4X is transported in a longitudinal direction. The raw fabric web 4X is transported, and thus, the fine strands 5X flow in the transport direction while meandering or bending in the transport direction. Thus, the raw fabric web 4X including the thermoplastic fine strands 5 having the transport direction as the flow direction is obtained. The raw fabric web 4X has anisotropy in tensile strength, and the tensile strength in the transport direction is higher than the tensile strength in the width direction.

Various elements are appropriately set, and thus, the raw fabric web 4X having an apparent density of 0.005 g/cm³ to 0.2 g/cm³ can be prepared.

For example, the diameter of the nozzle 61 (that is, the diameter of the fine strand 5X), the number of fine strands 5X, a discharge speed of the fine strand 5X, the discharge or stop of the fine strand 5X of each nozzle 61, a transport speed of the raw fabric web 4X, and the like are appropriately set.

For example, when the fine strand 5X having a large diameter is discharged from the nozzle 61, the raw fabric web 4X having a high apparent density can be prepared. When the number of fine strands 5X to be discharged is increased, since a layering degree of the fine strands 5X per unit area is increased, the raw fabric web 4X having a high apparent density (or basis weight) can be prepared. Further, when the discharge speed of the fine strand 5X is decreased, since the layering degree of the fine strands 5X per unit area is decreased, the raw fabric web 4X having a low apparent density (or basis weight) can be prepared. When the transport speed is increased, since the layering degree of the fine strands 5X per unit area is decreased, the raw fabric web 4X having a low apparent density (or basis weight) can be prepared.

Further, various elements are appropriately set, and thus, the raw fabric web 4X having a region having a high apparent density and a region having a low apparent density can be prepared.

For example, when the nozzles 61 that discharge the fine strands 5X from the beginning of the manufacture are stopped and the fine strands 5X having a large diameter are discharged from the nozzles 61 having a large diameter during the preparation of the raw fabric web 4X, the raw fabric web 4X partially having a region which includes the fine strands 5X having a large diameter and has a high apparent density can be prepared. Alternatively, when the fine strands 5X are discharged from another nozzles 61 in addition to the nozzles 61 that discharge the fine strands 5X from the beginning of the manufacture, the raw fabric web 4X having a region having a partially high apparent density can be prepared. Further, when the discharge speed of the fine strands 5X from the beginning of the manufacture is increased during the preparation of the raw fabric web 4X, the raw fabric web 4X having a region having a partially low apparent density can be prepared. Alternatively, when the transport speed is increased during the preparation, the raw fabric web 4X having a region having a partially high apparent density can be prepared.

As described above, when the upper 2 in which the apparent density of the instep corresponding portion 21 is lower than the apparent density of the heel corresponding portion 22 is prepared, the raw fabric web 4X in which the apparent density of the region to be the instep corresponding portion 21 of the upper 2 which is a final product becomes low may be prepared.

Similarly, when the upper 2 in which the basis weight of the instep corresponding portion 21 is larger than the basis weight of the heel corresponding portion 22 is prepared, the raw fabric web 4X in which the apparent density of the region to be the instep corresponding portion 21 of the upper 2 which is the final product becomes low may be prepared.

The raw fabric web 4X formed by point-bonding the fine strands 5X in the water has a long band shape and is wound around the winding portion 66, but is preferably dried by the dryer 64 before being wound if necessary. Further, if necessary, the raw fabric web 4X may be heated by the annealing machine 65. When the fine strands 5X discharged from the nozzles 61 are layered and come into contact with each other, the fine strands 5X are fused and point-bonded. Since this point-bonding is relatively loose, the contact portions of the fine strands 5X can be secondarily fused by heating the raw fabric web 4X by the annealing machine 65. When the secondary fusion is performed, the contact portions of the fine strands 5X are firmly point-bonded, and the strength of the raw fabric web 4X can be improved. An oven, a hot air device, or the like can be used as the annealing machine 65. A heating temperature of the raw fabric web 4X in an annealing treatment is not particularly limited, but there is a concern that the fine strands 5X are difficult to be secondarily fused when the heating temperature is too low and the three-dimensional shape of the fine strand 5X disappears when the heating temperature is too high. From this point of view, the heating temperature is close to the melting point of the thermoplastic polymer, and is, for example, preferably melting point -10°C to melting point +20°C. A heating time of the annealing treatment is not particularly limited, but is, for example, 100 seconds to 1000 seconds, and preferably 200 seconds to 500 seconds for the same reason.

### <<Preparation of upper>>

The obtained raw fabric web 4X is a web in which the plurality of thermoplastic fine strands 5 having a diameter ranging from 0.2 mm to 2 mm is randomly layered and point-bonded to each other, and is a web having an apparent density (basis weight) ranging from 0.005g/cm³ to 0.2g/cm³. The raw fabric web 4X is the same as the first region of the above web 41.

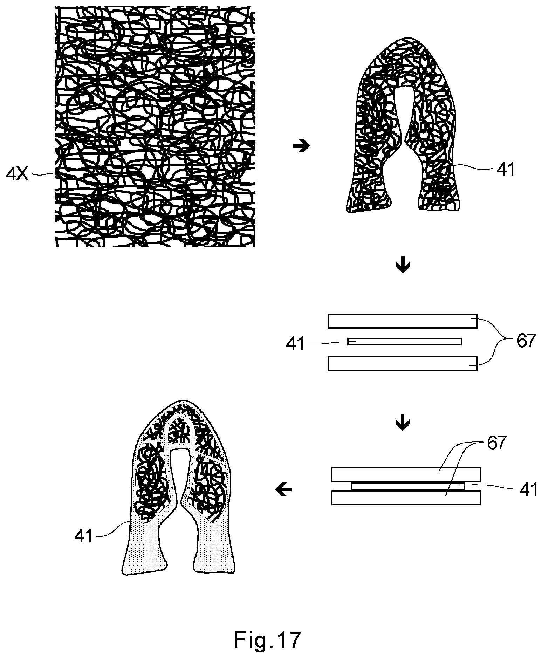

Referring to Fig. 17, the web 41 having a developed shape of the upper 2 is prepared by punching or cutting the raw fabric web 4X. Subsequently, the web 41 is heated and pressurized by a heated press machine 67 from above and below. In a region heated and pressurized by the press machine 67, the thermoplastic fine strands 5 are melted and deformed in the sheet form. The region formed in the sheet form is the second region, and has an apparent density higher than 0.2 g/cm³. Note that, in Fig. 17, innumerable dots are given to the region changed into the sheet form by heating and pressurizing. If necessary, the eyelet holes 27 are formed. In this manner, the web 41 having the developed shape of the upper as shown in Fig. 4 is obtained. The above upper 2 can be prepared by three-dimensionally assembling the web 41.

Note that, although the web 41 having the developed shape of the upper 2 is prepared from the raw fabric web 4X and the region having a high apparent density (second region) by heating the web is formed in the step of preparing the upper 2, the preparation procedure is not limited to this procedure. For example, the web 41 having the developed shape of the upper may be prepared by forming the region (second region) having a high apparent density by heating the raw fabric web 4X and then punching or cutting the raw fabric web. Alternatively, the forming of the region (second region) having a high apparent density by heating the raw fabric web 4X and the punching process may be simultaneously performed.

### <Second manufacturing method>

A second manufacturing method of the upper is a method of manufacturing the upper including the web having one or a plurality of randomly layered thermoplastic fine strands by using a nozzle for discharging the molten fine strands and a shoe-last.

In the second manufacturing method, the nozzle is a portion that discharges the molten fine strands. The nozzle is usually an opening formed in a die. The nozzle may be one or a plurality of nozzles. An extruder that melts and extrudes the thermoplastic polymer is connected to the die. The thermoplastic polymer extruded from the extruder becomes a molten fine strand, and is discharged from the nozzle. A moving device is provided at the nozzle (die), and the nozzle (die) can be randomly moved three-dimensionally (up, down, left, right, front, and back) by the moving device. The movement of the nozzle, the discharge speed of the fine strand discharged from the nozzle, the discharge or stop of the fine strand from the nozzle, and the like are controlled by a control unit (computer or the like).

The shoe-last is a heat-resistant member that resembles a human foot. The shoe-last can be made of metal, heat-resistant resin, ceramic, or the like. Further, the foot of the user may be used as the shoe-last. However, in order to prevent the molten fine strands from directly adhering to the foot of the user, a mold obtained by fitting a thin heat-resistant sock to the foot of the user is used as the shoe-last. Note that, the upper shaped along the shoe-last may be difficult to be removed from the shoe-last in some surface materials of the shoe-last. In the case of the shoe-last having such a surface material, a mold release treatment is preferably applied on the surface thereof.

After the nozzle and the shoe-last are prepared, setting data of the thickness and apparent density of the web is input (setting data input step). As will be described later, the fine strands discharged from the nozzle adhere to the shoe-last, and thus, the web is formed around the shoe-last and the upper is formed. The upper is formed from the web, but the thickness and apparent density of the web are input to the control unit according to the portion of the upper to be formed in the setting data input step.

For example, when there is an attempt to form an upper in which the apparent density of the instep corresponding portion is lower than the apparent density of the heel corresponding portion, such setting data is input to the control unit. For example, when there is an attempt to form an upper in which the thickness of a part of the instep corresponding portion is smaller than the thickness of the other part of the instep corresponding portion, such setting data is input to the control unit.

Shoe-last data is generated by measuring a shape of the shoe-last, and the data is input (shoe-last data generation step). The shoe-last data generation step may be performed before the setting data input step, may be performed after the setting data input step, or may be performed simultaneously with the setting data input step.

The shoe-last data can be obtained, for example, by photographing the shoe-last by using a conventionally known camera and measuring and analyzing the photographed data. The shoe-last data is conceptually a three-dimensional image. The shoe-last data is input to and stored in the control unit.

Note that, data stored in a separately prepared server may be used as the shoe-last data.

The control unit generates an operation condition of the nozzle based on the shoe-last and the input setting data (operation condition generation step). The operation condition of the nozzle is automatically generated according to a protocol programmed in the control unit.

According to this operation condition, the control unit operates the nozzle, and the upper is formed by randomly layering one or the plurality of molten fine strands at the shoe-last (shaping step).

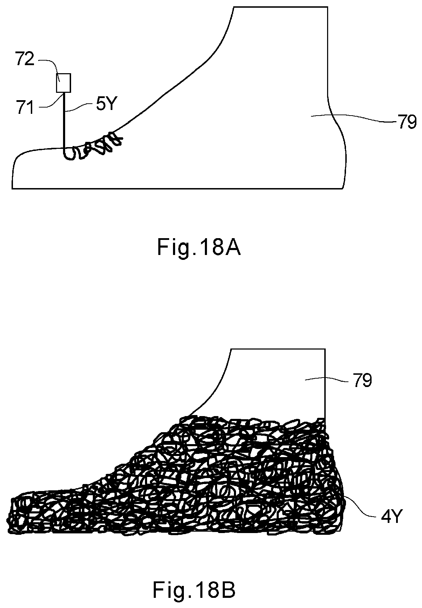

Specifically, referring to Fig. 18A, a molten thermoplastic polymer is supplied to a die 72 from an extruder (not shown), and a molten fine strand 5Y is discharged from a nozzle 71 and adheres to a surface of a shoe-last 79. The control unit moves the nozzle 71 according to the shoe-last data and the setting data, and the fine strand 5Y discharged from the nozzle 71 is randomly layered and point-bonded on the shoe-last 79. In this manner, a three-dimensional web 4Y is shaped along the surface of the shoe-last 79. At this time, the control unit controls a moving speed and a position of the nozzle 71, a discharge speed of the fine strand 5Y, the discharge and stop of the fine strand 5Y, and the like such that the thickness and the apparent density of the web are set according to the set data.

As shown in Fig. 18B, the three-dimensional web 4Y along the shoe-last 79 is formed around the shoe-last 79. This web 4Y is equivalent to a web obtained by three-dimensionally forming the raw fabric web 4X described in the above <<Preparation of raw fabric web>> along the shoe-last 79. That is, this three-dimensional web 4Y includes the point-bonded thermoplastic fine strands having a diameter of 0.2 mm to 2 mm, has an apparent density of 0.005 g/cm³ to 0.2 g/cm³, and is the same as the raw fabric web 4X including only the first region.

If necessary, the point-bonding of the fine strands is strengthened by performing the annealing treatment described in the above <First manufacturing method> on the three-dimensional web 4Y.

The second region is partially formed by heating and pressurizing a desired region of the three-dimensional web by using a press machine (not shown), and thus, the upper can be formed. Note that, when the shoe-last 79 cannot withstand the heating and pressurizing, the heating and pressurizing are preferably performed after the three-dimensional web 4Y is removed from the shoe-last 79.

According to the second manufacturing method, since the upper (web) is prepared by using the shoe-last, custom-made shoes corresponding to the user can be easily prepared. Moreover, according to the second manufacturing method, a seamless three-dimensional upper can be obtained. Further, according to the second manufacturing method, the upper (web) can be formed by discharging one fine strand from one nozzle.

### <Third manufacturing method>

A third manufacturing method of the upper is a method of manufacturing the upper including the web having one or the plurality of randomly layered thermoplastic fine strands by using a 3D printer.

A conventionally known one can be used as the 3D printer.

Similar to the above <second manufacturing method>, the setting data of the thickness and apparent density of the web is input to a control unit of the 3D printer according to the portion of the upper (setting data input step).

The shoe-last data is generated by measuring a foot shape of the user (shoe-last data generation step). The shoe-last data generation step may be performed before the setting data input step, may be performed after the setting data input step, or may be performed simultaneously with the setting data input step.

The shoe-last data can be obtained, for example, by photographing the foot of the user by using a conventionally known camera and measuring and analyzing the photographed data. The shoe-last data is input and stored in the control unit of the 3D printer. Note that, when a 3D printer provided with a camera is used, the input of the shoe-last data is omitted.

An operation condition of the 3D printer is generated based on the setting data and the shoe-last data (operation condition generation step). This operation condition is automatically generated according to a protocol programmed in the control unit of the 3D printer.

The three-dimensional web is formed by operating the 3D printer according to this operation condition. This three-dimensional web includes the point-bonded thermoplastic fine strands having a diameter of 0.2 mm to 2 mm, has an apparent density ranging from 0.005 g/cm³ to 0.2 g/cm³, and is the same as the raw fabric web including only the first region.

If necessary, the point-bonding of the thermoplastic fine strands is strengthened by performing the annealing treatment described in the above

### <First manufacturing method> on the three-dimensional web.

The second region is partially formed by heating and pressurizing a desired region of the three-dimensional web by using a press machine, and thus, the upper can be formed.

According to the third manufacturing method, since the foot shape of the user is measured and the upper is formed by using the 3D printer based on the measurement, the custom-made shoes can be easily prepared. Moreover, according to the third manufacturing method, the seamless three-dimensional upper can be obtained.

Next, second to fourth embodiments of the shoe of the present invention will be described. In the description thereof, configurations and effects different from those of the above-described embodiment will be mainly described. Similar configurations and the like will be omitted, and the above description of the first embodiment can be used as it is.

### [SECOND EMBODIMENT]

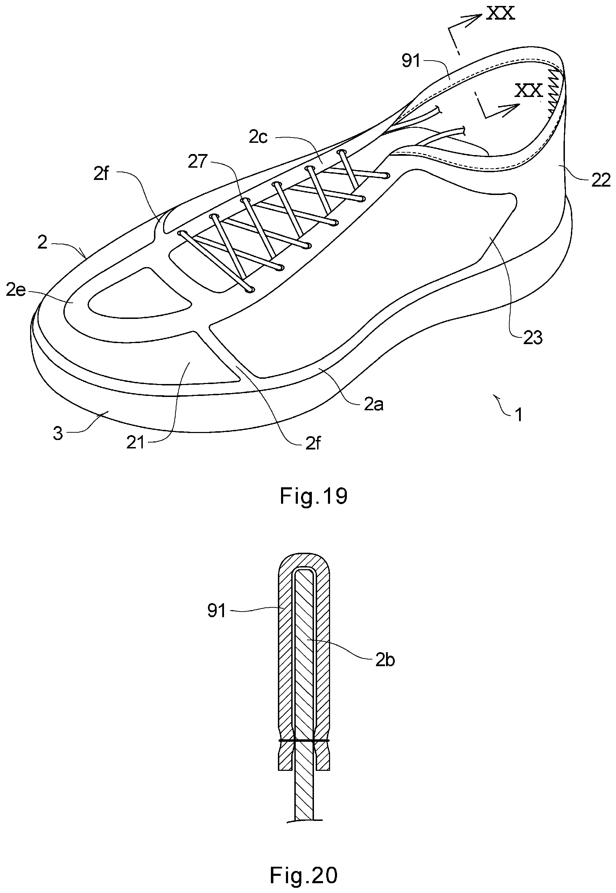

In a shoe 1 of the second embodiment, a protective sheet 91 is attached to an upper edge portion 2b of an upper 2 as shown in Figs. 19 and 20.

A flexible synthetic resin sheet, cloth, or the like can be used as the protective sheet 91. The protective sheet 91 bends and is attached so as to cover inner and outer surfaces of the upper edge portion 2b of the upper 2. A method of attaching the protective sheet 91 to the upper edge portion 2b is not particularly limited, and adhesion using an adhesive may be used in addition to the illustrated sewing.

Although it has been described in the first embodiment that the upper edge portion 2b of the upper 2 is formed by the second region of the web 41, the second region is difficult to directly come in contact with the ankle by attaching the protective sheet 91 to the upper edge portion. The protective sheet 91 is provided, and thus, a feeling comfortable to wear the shoe 1 is improved.

### [THIRD EMBODIMENT]

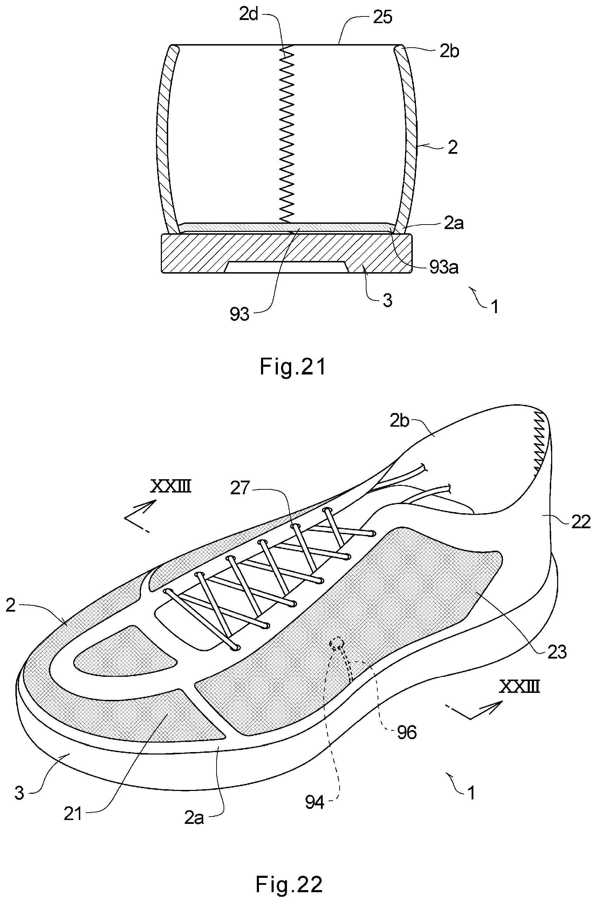

As shown in Fig. 21, a shoe 1 of a third embodiment includes an inner sole 93 on an upper surface of a sole 3.

The inner sole 93 is a member that a rear part of the foot of the user directly comes into contact with. Although it has been described in the first embodiment that the rear part of the foot of the user comes into contact with the upper surface of the sole 3, the rear part of the foot comes into contact with the inner sole 93 in the case of the shoe 1 including the inner sole 93 as in the present embodiment.

The inner sole 93 is formed from a second web in which one or a plurality of randomly layered thermoplastic fine strands is point-bonded to each other at contact portions thereof. Although not shown in particular, this second web is structurally the same as the first region (and the raw fabric web 4X) of the first embodiment. However, a diameter of the thermoplastic fine strand constituting the second web is smaller than the diameter of the thermoplastic fine strand 5 constituting the first region. Alternatively, an apparent density of the second web is lower than the apparent density of the first region. Alternatively, the second web is constituted by the thermoplastic fine strands having a diameter smaller than that of the thermoplastic fine strands 5 constituting the first region, and the apparent density thereof is lower than the apparent density of the first region. The second web can be prepared by the same method as the above <<Preparation of raw fabric web>> except that the diameter and/or apparent density of the fine strand is decreased.

The inner sole 93 is formed in a shape of the rear part of the foot in plan view. The inner sole 93 may be mounted on the upper surface of the sole 3 and may be attached to the upper 2 and/or the sole 3, or may be only mounted on the upper surface of the sole 3 and may not be attached to the upper 2 and the sole 3.

In the illustrated example, a peripheral edge portion 93a of the inner sole 93 is attached to a lower edge portion 2a of the upper 2. A method of attaching the inner sole 93 to the upper 2 is not particularly limited, and includes, for example, adhesion using an adhesive, sewing, and the like.

Since the diameter of the thermoplastic fine strand is small and/or the apparent density is low, the second web is relatively soft. The inner sole 93 including the second web is provided, and thus, the shoe 1 in which the user is hard to feel a sense of discomfort from the rear part of the foot can be provided. The shoe 1 including the inner sole 93 of the present embodiment can give the user a feeling comfortable to wear the shoes.

### [FOURTH EMBODIMENT]

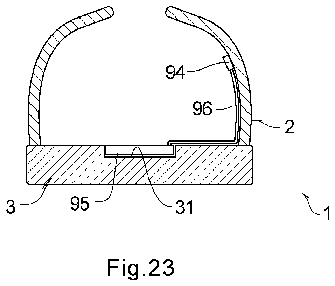

As shown in Figs. 22 and 23, a shoe 1 of a fourth embodiment includes a luminous body 94 at at least a part of a first region of an upper 2. In Fig. 22, the first region is shaded.

Note that, the luminous body 94 is preferably provided in the first region, but may be provided in a second region.

An LED, a light bulb, or the like can be used as the luminous body 94. The luminous body 94 is embedded inside the first region, or is attached to the inside of the first region as shown in the illustrated example. When the LED or the light bulb is used as the luminous body 94, a battery 95 is provided at an appropriate location in the shoe 1. The battery 95 is, for example, fitted into a recess portion 31 formed in a sole 3, or is embedded inside the sole 3. The luminous body 94 such as the LED is connected to the battery 95 via an electrical cord 96. The luminous body 94 emits light by a current from the battery 95.

As described above, since the first region has a plurality of relatively large voids, the light emission of the luminous body 94 can be satisfactorily visually recognized from the outside. The luminous body 94 is provided, and thus, the shoe 1 with high decorativeness that appeal to the vision of the user can be provided. Further, such a shoe 1 is easily noticeable in a dark location (for example, a road at night). Thus, the shoe 1 can also contribute to a safety aspect that a driver of the vehicle can easily recognize the presence of the user who wears the shoe 1 at night, for example.

### [OTHERS]

The description of each of the above-described embodiments includes the following aspects.

The second region of the upper 2 in the above-mentioned shoe 1 is formed in a sheet form. Since the second region in the sheet form is excellent in strength, the durability of the upper 2 can be improved by having the second region in the sheet form.

The upper 2 of the above-mentioned shoe 1 includes an instep corresponding portion 21 corresponding to an instep part of a foot, and a heel corresponding portion 22 corresponding to a heel part of the foot, and a basis weight of a web 41 forming the instep corresponding portion 21 is larger than a basis weight of a web 41 forming the heel corresponding portion 22. The basis weight of the web 41 forming the instep corresponding portion 21 is larger than the basis weight of the web 41 forming the heel corresponding portion 22, and thus, the strength of the instep corresponding portion 21 can be improved.

The upper 2 of the above-mentioned shoe 1 includes an instep corresponding portion 21 corresponding to an instep part of a foot, and a heel corresponding portion 22 corresponding to a heel part of the foot, and an apparent density of the instep corresponding portion 21 in whole or part is lower than an apparent density of the heel corresponding portion 22. Since the apparent density of the instep corresponding portion 21 is low, the instep corresponding portion 21 having excellent air permeability can be formed, and the feel of use of the shoe 1 is improved.

The instep corresponding portion 21 of the upper 2 in the above-mentioned shoe 1 is formed in whole or part by the first region, and the heel corresponding portion 22 is formed in whole or part by the second region. The instep corresponding portion 21 having excellent air permeability, excellent quick-drying properties, and good cushioning properties can be formed by forming the instep corresponding portion 21 by the first region, and the upper 2 easy to fit the foot can be formed by forming the heel corresponding portion 22 by the second region.

The first region of the above-mentioned web 41 has anisotropy in tensile strength, and the first region is arranged by aligning a direction in which the tensile strength is high with a foot width direction of the upper. The durability of the upper 2 can be improved by aligning the direction in which the tensile strength is high with the foot width direction of the upper 2.

The upper 2 of the above-mentioned shoe 1 includes a foot insertion portion 25 defined by an upper edge portion 2b, and the upper edge portion 2b that defines the foot insertion portion 25 is formed by the second region. The upper edge portion 2b of the upper 2 is a location that the foot of the user and the like frequently comes into contact with and is easily worn, and the durability of the upper 2 can be improved by forming the upper edge portion 2b by the second region.

A protective sheet is attached to the upper edge portion 2b of the above-mentioned upper 2. The shoe 1 in which the protective sheet 91 is provided on the upper edge portion 2b of the upper 2 can give the user a feeling comfortable to wear the shoes.

An inner sole 93 is provided on an upper surface of the sole 3 of the above-mentioned shoe 1. The inner sole 93 is formed from a second web in which one or a plurality of randomly layered thermoplastic fine strands 5 is point-bonded to each other at contact portions, and a diameter of the thermoplastic fine strand 5 of the second web is smaller than the diameter of the thermoplastic fine strand 5 of the first region.

Further, an inner sole 93 is provided on an upper surface of the sole 3 of the above-mentioned shoe 1. The inner sole 93 is formed from a second web in which one or a plurality of randomly layered thermoplastic fine strands 5 is point-bonded to each other at contact portions, and an apparent density of the second web is lower than the apparent density of the first region.

Since the inner sole 93 formed from the second web is relatively soft, the shoe 1 provided with the inner sole 93 can give the user a feeling comfortable to wear the shoes.

A luminous body 94 is provided at at least a part of the first region of the upper 2 in the above-mentioned shoe 1.

Since the first region has a plurality of relatively large voids, the light emission of the luminous body 94 provided in the first region can be satisfactorily visually recognized from the outside of the upper 2. The shoe 1 provided with the luminous body 94 is excellent in decorativeness.

### DESCRIPTION OF REFERENCE SIGNS

1: Shoe
2: Upper
2a: Lower edge portion of upper
2b: Upper edge portion of upper
21: Instep corresponding portion
22: Heel corresponding portion
25: Foot insertion portion
3: Sole
41: Web
5: Thermoplastic fine strand
93: Inner sole
94: Luminous body

## Claims

1. A shoe (1) comprising:
an upper (2); and
a sole (3),
wherein the upper (2) is formed from a web (41) including one or a plurality of randomly layered thermoplastic fine strands,
the web (41) includes a first region in which the thermoplastic fine strand is point-bonded to each other at contact portions and a three-dimensional shape of the thermoplastic fine strand is maintained and a second region formed in a sheet form in which the thermoplastic fine strand is fused and a three-dimensional shape of the thermoplastic fine strand disappears or is deformed, the second region having an apparent density higher than an apparent density of the first region, wherein
a thickness of the first region is 5 mm to 30 mm, and
a diameter of the thermoplastic fine strand in the first region ranges from 0.2 mm to 2 mm, and the apparent density of the first region ranges from 0.005 g/cm³ to 0.2 g/cm³.

2. The shoe (1) according to claim 1, wherein the second region is formed in a sheet form.

3. The shoe (1) according to claim 1 or 2, wherein
the upper (2) includes an instep corresponding portion corresponding to an instep part of a foot, and a heel corresponding portion corresponding to a heel part of the foot, and
a basis weight of the web (41) forming the instep corresponding portion is larger than a basis weight of the web (41) forming the heel corresponding portion.

4. The shoe (1) according to any one of claims 1 to 3, wherein
the upper (2) includes an instep corresponding portion corresponding to an instep part of a foot, and a heel corresponding portion corresponding to a heel part of the foot, and
an apparent density of the instep corresponding portion in whole or part is lower than an apparent density of the heel corresponding portion.

5. The shoe (1) according to claim 4, wherein
the instep corresponding portion is formed in whole or part by the first region, and
the heel corresponding portion is formed in whole or part by the second region.

6. The shoe (1) according to any one of claims 1 to 5, wherein
the first region has anisotropy in tensile strength, and
the first region is arranged by aligning a direction in which the tensile strength is high with a foot width direction of the upper (2).

7. The shoe (1) according to any one of claims 1 to 6, wherein
the upper (2) includes a foot insertion portion defined by an upper edge portion, and
the upper edge portion that defines the foot insertion portion is formed by the second region.

8. The shoe (1) according to claim 7, wherein a protective sheet is attached to the upper edge portion.

9. The shoe (1) according to any one of claims 1 to 8, wherein
an inner sole is provided on an upper surface of the sole (3),
the inner sole is formed from a second web in which one or a plurality of randomly layered thermoplastic fine strands is point-bonded to each other at contact portions, and
a diameter of the thermoplastic fine strand of the second web is smaller than the diameter of the thermoplastic fine strand of the first region.

10. The shoe (1) according to any one of claims 1 to 9, wherein
an inner sole is provided on an upper surface of the sole (3),
the inner sole is formed from a second web in which one or a plurality of randomly layered thermoplastic fine strands is point-bonded to each other at contact portions, and
an apparent density of the second web is lower than the apparent density of the first region.

11. The shoe (1) according to any one of claims 1 to 10, wherein a luminous body is provided at at least a part of the first region of the upper (2).

12. The shoe according to any one of claims 1 to 11, wherein
the second region is formed in a sheet form having a small hole.

13. A method of manufacturing an upper (2) of a shoe (1) formed from a web (41) having one or a plurality of randomly layered thermoplastic fine strands by using a nozzle for discharging a molten fine strand and a shoe-last, the method comprising:
a setting data input step of inputting setting data of a thickness and an apparent density of the web (41) according to a portion of the upper (2);
a shoe-last data generation step of generating shoe-last data by measuring a shape of the shoe-last and inputting the shoe-last data;
an operation condition generation step of generating an operation condition of the nozzle based on the setting data and the shoe-last data; and
a shaping step of forming the upper (2) by operating the nozzle according to the operation condition, randomly layering the one or plurality of molten fine strands on the shoe-last to form a three-dimensional web (41) along the shoe-last, and partially heating and pressurizing the three-dimensional web (41) by using a press machine.

## Patentansprüche

1. Schuh (1), umfassend:
einen Schaft (2); und
eine Sohle (3),
wobei der Schaft (2) aus einer Bahn (41) gebildet ist, die einen oder eine Vielzahl von willkürlich überlagerten thermoplastischen feinen Strängen einschließt,
die Bahn (41) einen ersten Bereich, in dem die thermoplastischen feinen Stränge an Kontaktabschnitten miteinander punktgebunden sind und eine dreidimensionale Gestalt des thermoplastischen feinen Strangs aufrechterhalten wird, und einen zweiten Bereich einschließt, der in einer Blattform gebildet ist, in der der thermoplastische feine Strang fusioniert ist und eine dreidimensionale Gestalt des thermoplastischen feinen Strangs verschwindet oder verformt ist, wobei der zweite Bereich eine Rohdichte aufweist, die höher ist als eine Rohdichte des ersten Bereichs, wobei
eine Dicke des ersten Bereichs 5 mm bis 30 mm beträgt, und
ein Durchmesser des thermoplastischen feinen Strangs in dem ersten Bereich im Bereich von 0,2 mm bis 2 mm liegt, und die Rohdichte des ersten Bereichs im Bereich von 0,005 g/cm³ bis 0,2 g/cm³ liegt.

2. Schuh (1) nach Anspruch 1, wobei der zweite Bereich in einer Blattform gebildet ist.

3. Schuh (1) nach Anspruch 1 oder 2, wobei
der Schaft (2) einen einem Rist entsprechenden Abschnitt, der einem Ristteil eines Fußes entspricht, und einen einer Ferse entsprechenden Abschnitt umfasst, der einem Fersenteil des Fußes entspricht, und
eine Grammatur der Bahn (41), die den einem Rist entsprechenden Abschnitt bildet, höher als eine Grammatur der Bahn (41) ist, die den einer Ferse entsprechenden Abschnitt bildet.

4. Schuh (1) nach einem der Ansprüche 1 bis 3, wobei
der Schaft (2) einen einem Rist entsprechenden Abschnitt, der einem Ristteil eines Fußes entspricht, und einen einer Ferse entsprechenden Abschnitt umfasst, der einem Fersenteil des Fußes entspricht, und
eine Rohdichte des einem Rist entsprechenden Abschnitts vollständig oder teilweise niedriger ist als eine Rohdichte des einer Ferse entsprechenden Abschnitts.

5. Schuh (1) nach Anspruch 4, wobei
der einem Rist entsprechende Abschnitt vollständig oder teilweise durch den ersten Bereich gebildet ist, und
der einer Ferse entsprechende Abschnitt vollständig oder teilweise durch den zweiten Bereich gebildet ist.

6. Schuh (1) nach einem der Ansprüche 1 bis 5, wobei
der erste Bereich eine Anisotropie bezüglich der Zugfestigkeit aufweist, und
der erste Bereich durch Ausrichten einer Richtung, in der die Zugfestigkeit hoch ist, mit einer Fußbreitenrichtung des Schafts (2) angeordnet ist.

7. Schuh (1) nach einem der Ansprüche 1 bis 6, wobei
der Schaft (2) einen Fußeinsteckabschnitt einschließt, der durch einen oberen Kantenabschnitt definiert ist, und
der obere Kantenabschnitt, der den Fußeinsteckabschnitt definiert, durch den zweiten Bereich gebildet ist.

8. Schuh (1) nach Anspruch 7, wobei ein Schutzblatt an dem oberen Kantenabschnitt angebracht ist.

9. Schuh (1) nach einem der Ansprüche 1 bis 8, wobei
eine Innensohle an einer oberen Oberfläche der Sohle (3) bereitgestellt ist,
die Innensohle aus einer zweiten Bahn gebildet ist, in der ein oder eine Vielzahl von willkürlich überlagerten thermoplastischen feinen Strängen an Kontaktabschnitten aneinander punktgebunden sind, und
ein Durchmesser des thermoplastischen feinen Strangs der zweiten Bahn geringer ist als der Durchmesser des thermoplastischen feinen Strangs des ersten Bereichs.

10. Schuh (1) nach einem der Ansprüche 1 bis 9, wobei
eine Innensohle auf einer oberen Oberfläche der Sohle (3) bereitgestellt ist,
die Innensohle aus einer zweiten Bahn gebildet ist, in der ein oder eine Vielzahl von willkürlich überlagerten thermoplastischen feinen Strängen an Kontaktabschnitten aneinander punktgebunden sind, und
eine Rohdichte der zweiten Bahn niedriger ist als die Rohdichte des ersten Bereichs.

11. Schuh (1) nach einem der Ansprüche 1 bis 10, wobei ein leuchtender Körper in mindestens einem Teil des ersten Bereichs des Schafts (2) bereitgestellt ist.

12. Schuh (1) nach einem der Ansprüche 1 bis 11, wobei
der zweite Bereich in einer Blattform gebildet wird, die ein kleines Loch aufweist

13. Verfahren zum Herstellen eines Schafts (2) eines Schuhs (1), der aus einer Bahn (41) gebildet ist, die einen oder eine Vielzahl von willkürlich überlagerten thermoplastischen feinen Strängen aufweist, durch Verwenden einer Düse zum Ausgeben eines geschmolzenen feinen Strangs und eines Schuhleistens, wobei das Verfahren Folgendes umfasst:
einen Einstelldateneingabeschritt des Eingebens von Einstelldaten einer Dicke und einer Rohdichte der Bahn (41) gemäß einem Abschnitt des Schafts (2);
einen Schuhleistendaten-Erzeugungsschritt des Erzeugens von Schuhleistendaten durch Messen einer Gestalt des Schuhleistens und Eingeben der Schuhleistendaten;
einen Bedienungsbedingung-Erzeugungsschritt des Erzeugens einer Bedienungsbedingung der Düse auf der Basis der Einstelldaten und der Schuhleistendaten; und
einen Gestaltungsschritt des Bildens des Schafts (2) durch Bedienen der Düse gemäß der Bedienungsbedingung, willkürliches Überlagern des einen oder der Vielzahl von geschmolzenen feinen Strängen auf dem Schuhleisten, um eine dreidimensionale Bahn (41) dem Schuhleisten entlang zu bilden, und teilweises Erhitzen und Unterdrucksetzen der dreidimensionalen Bahn (41) durch Verwenden einer Pressmaschine.

## Revendications

1. Chaussure (1), comprenant :
une tige (2), et
une semelle (3),
dans laquelle la tige (2) est formée à partir d'un voile (41) incluant un ou une pluralité de fils fins thermoplastiques à chevauchement aléatoire,
le voile (41) inclut une première région dans laquelle les fils fins thermoplastiques sont liés par points l'un à l'autre au niveau de parties de contact et une forme tridimensionnelle du fil fin thermoplastique est maintenue et une deuxième région formée dans une forme de feuille dans laquelle le fil fin thermoplastique est fusionné et une forme tridimensionnelle du fil fin thermoplastique disparaît ou est déformée, la deuxième région ayant une densité apparente supérieure à une densité apparente de la première région, dans laquelle
une épaisseur de la première région est de 5 mm à 30 mm, et
un diamètre du fil fin thermoplastique dans la première région va de 0,2 mm à 2 mm, et la densité apparente de la première région va de 0,005 g/cm³ à 0,2 g/cm³.

2. Chaussure (1) selon la revendication 1, dans laquelle la deuxième région est formée dans une forme de feuille.

3. Chaussure (1) selon la revendication 1 ou 2, dans laquelle
la tige (2) inclut une partie correspondant à un cou-de-pied qui correspond à une partie de cou-de-pied d'un pied, et une partie correspondant à un talon qui correspond à une partie de talon du pied, et
une masse surfacique du voile (41) formant la partie correspondant à un cou-de-pied est supérieur à une masse surfacique du voile (41) formant la partie correspondant à un talon.

4. Chaussure (1) selon l'une quelconque des revendications 1 à 3, dans laquelle
la tige (2) inclut une partie correspondant à un cou-de-pied qui correspond à une partie de cou-de-pied d'un pied, et une partie correspondant à un talon qui correspond à une partie de talon du pied, et
une densité apparente de la partie correspondant à un cou-de-pied dans sa totalité ou en partie est inférieure à une densité apparente de la partie correspondant à un talon.

5. Chaussure (1) selon la revendication 4, dans laquelle
la partie correspondant à un cou-de-pied est formée dans sa totalité ou en partie par la première région, et
la partie correspondant à un talon est formée dans sa totalité ou en partie par la deuxième région.

6. Chaussure (1) selon l'une quelconque des revendications 1 à 5, dans laquelle
la première région présente une anisotropie dans la résistance à la traction, et
la première région est agencée en alignant une direction dans laquelle la résistance à la traction est élevée avec une direction de largeur de pied de la tige (2).

7. Chaussure (1) selon l'une quelconque des revendications 1 à 6, dans laquelle
la tige (2) inclut une partie d'insertion de pied définie par une partie de bord supérieur, et
la partie de bord supérieur qui définit la partie d'insertion de pied est formée par la deuxième région.

8. Chaussure (1) selon la revendication 7, dans laquelle une feuille de protection est fixée à la partie de bord supérieur.

9. Chaussure (1) selon l'une quelconque des revendications 1 à 8, dans laquelle
une semelle intérieure est fournie sur une surface supérieure de la semelle (3),
la semelle intérieure est formée à partir d'un deuxième voile dans lequel un ou une pluralité de fils fins thermoplastiques à chevauchement aléatoire sont liés par points l'un à l'autre au niveau de points de contact, et
un diamètre des fils fins thermoplastiques du deuxième voile est inférieur au diamètre des fils fins thermoplastiques de la première région.

10. Chaussure (1) selon l'une quelconque des revendications 1 à 9, dans laquelle
une semelle intérieure est fournie sur une surface supérieure de la semelle (3),
la semelle intérieure est formée à partir d'un deuxième voile dans lequel un ou une pluralité de fils fins thermoplastiques à chevauchement aléatoire sont liés par points l'un à l'autre au niveau de points de contact, et
une densité apparente du deuxième voile est inférieure à la densité apparente de la première région.

11. Chaussure (1) selon l'une quelconque des revendications 1 à 10, dans laquelle un corps lumineux est fourni sur au moins une partie de la première région de la tige (2).

12. Chaussure (1) selon l'une quelconque des revendications 1 à 11, dans laquelle
la deuxième région est formée dans une forme de feuille comportant un petit orifice.

13. Procédé de fabrication d'une tige (2) d'une chaussure (1) formée à partir d'un voile (41) comportant un ou une pluralité de fils fins thermoplastiques à chevauchement aléatoire en utilisant une filière pour évacuer un fil fin fondu et une forme à chaussure, le procédé comprenant :
une étape d'entrée de données de réglage consistant à entrer des données de réglage d'une épaisseur et d'une densité apparente du voile (41) conformément à une partie de la tige (2),
une étape de génération de données de forme à chaussure consistant à générer des données de forme à chaussure en mesurant une forme de la forme à chaussure et en entrant les données de forme à chaussure,
une étape de génération de condition de fonctionnement consistant à générer une condition de fonctionnement de la filière sur la base des données de réglage et des données de forme à chaussure, et
une étape de façonnement consistant à former la tige (2) en faisant fonctionner la filière selon la condition de fonctionnement, en faisant chevaucher aléatoirement l'un ou la pluralité de fils fins fondus sur la forme à chaussure pour former un voile tridimensionnel (41) le long de la forme à chaussure, et en chauffant et en pressurisant en partie le voile tridimensionnel (41) à l'aide d'une presse.
